# FASCICULE DE BREVET EUROPEEN

(11) **EP 0 439 978 B1**
(45) Date de publication et mention de la délivrance du brevet: **10.11.1993**
(21) Numéro de dépôt: 90403788.4
(22) Date de dépôt: 27.12.1990
(51) Int. Cl.: B60G 7/02, B62D 7/14

(54) **Essieu arrière de véhicule automobile comportant une traverse montée pivotante par rapport à la caisse et véhicule équipé d'un tel essieu**
Kraftfahrzeughinterachse mit in Beziehung zum Chassis drehbaren Querträger
Motor car rear axle having a transverse mounting member pivotable with respect to the chassis

(30) Priorité: 29.01.1990 FR 9001002
(43) Date de publication de la demande: 07.08.1991
(73) Titulaire: AUTOMOBILES PEUGEOT, 75116 Paris (FR); AUTOMOBILES CITROEN, 92200 Neuilly-sur-Seine (FR)
(72) Inventeur: Galtier, Lucien, F-91390 Morsang sur Orge (FR); Barthelemy, André, F-78470 Saint Remy Les Chevreuse (FR)
(74) Mandataire: Berger, Helmut

(56) Documents cités:
- EP-A- 0 096 345
- EP-A- 0 115 356
- EP-A- 0 252 805
- EP-A- 0 340 179
- FR-A- 2 564 785
- FR-A- 2 596 010
- GB-A- 2 076 759
- PATENT ABSTRACTS OF JAPAN vol. 8, no. 182 (M-319)(1619) 22 août 1984,& JP-A-59 75811 (FUJI JUKOGYO) 28 avril 1984,
- PATENT ABSTRACTS OF JAPAN vol. 10, no. 6 (M-445)(2063) 11 janvier 1986,& JP-A-60 169312 (MAZDA) 02 septembre 1985,
- PATENT ABSTRACTS OF JAPAN vol. 10, no. 6 (M-445)(2063) 11 janvier 1986,& JP-A-60 169310 (MAZDA) 02 septembre 1985,

## Description

L'invention concerne un essieu arrière de véhicule automobile du type décrit dans le préambule de la revendication principale.

Un essieu de ce type est déjà décrit dans le document EP-A-0 252 805. Or, les moyens de flexion des premiers dispositifs de liaison élastiques de cet essieu arrière connu se sont révélés insuffisants pour procurer la précision souhaitée.

La présente invention a pour but de proposer un essieu arrière qui palit l'inconvénient qui vient d'être énoncé.

Pour atteindre ce but, un essieu arrière de véhicule automobile selon l'invention comporte les caractéristiques qui sont énoncées dans la partie caractérisante de la revendication principale.

L'utilisation de biellettes dans un essieu arrière du type à bras tiré, qui s'étendent sensiblement radialement par rapport à l'axe fictif, est déjà connu par le document FR-A-2 564 785. Mais cet essieu présente une structure différente de celle de l'essieu selon l'invention, car il comprend une barre de torsion fixée rigidement à la traverse et cette dernière relie les bras de façon que les articulations reliant ces derniers à la caisse soient sollicités par le débattement de la suspension. D'autre part, les liaisons élastiques entre l'essieu et la caisse ne comportent pas les seconds dispositifs élastiques de l'essieu arrière selon l'invention. Dans cet essieu connu, les biellettes sont fixées à leurs extrémités, d'une part, à des éléments qui sont solidaires de la caisse et, d'autre part, aux extrémités des bras, qui sont opposées à celles supportant les roues.

Etant donné que l'essieu arrière selon le document FR-A-2 564 785 présente une structure très différente de l'essieu selon l'invention et que les biellettes sont montées d'une manière différente de celle décrite dans la partie caractérisante de la revendication principale de l'invention et produisent ainsi un effet également différent, les biellettes selon l'invention, qui sont articulées par une extrémité à la caisse concentriquement au centre des premiers dispositifs de liaison élastiques ne découlent pas de façon évidente du document FR-A-2 564 785.

D'autres caractéristiques avantageuses de l'invention sont décrites dans des revendications qui dépendent de la revendication principale.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un (deux, ou plusieurs) mode (s) de réalisation de l'invention, et dans lesquels :
La figure 1 est une vue de dessus de l'essieu arrière de véhicule automobile et du système de liaison élastique de cet essieu à la caisse du véhicule, selon la présente invention;
La figure 2 est une vue en coupe, avec arrachement et à plus grande échelle, le long de la ligne II-II de la figure 1, d'un dispositif de liaison élastique avant, selon l'invention;
La figure 3 est une vue en coupe selon la ligne III-III de la figure 2;
La figure 4 montre un premier mode de réalisation d'un système mécanique de commande de l'essieu arrière pourvu d'un système de liaison élastique selon la figure 1 ;
La figure 5 est une vue à plus grande échelle et avec arrachement du système mécanique de commande selon la figure 4 ;
La figure 6 est une vue en direction de la flèche VI de la figure 5 ;
La figure 7 montre la courbe caractéristique de l'angle de braquage de la traverse arrière en fonction de l'angle de rotation du volant du système mécanique de commande selon la figure 4 .
La figure 8 montre un deuxième mode de réalisation d'un système de commande de direction d'une traverse arrière pourvu d'un système de liaison élastique selon la figure 1 ;
La figure 9 est une vue avec arrachement et à plus grande échelle d'un dispositif de liaison élastique à commande de direction selon la figure 8 ;
La figure 10 est une vue en coupe selon la ligne X-X de la figure 9 ;
La figure 11 illustre une variante du système de commande de direction de l'essieu arrière selon la figure 8 ; et
La figure 12 illustre sous forme d'un schéma bloc le système hydraulique d'un système de commande de direction de l'essieu arrière selon la figure 8 et de sa variante selon la figure 11.

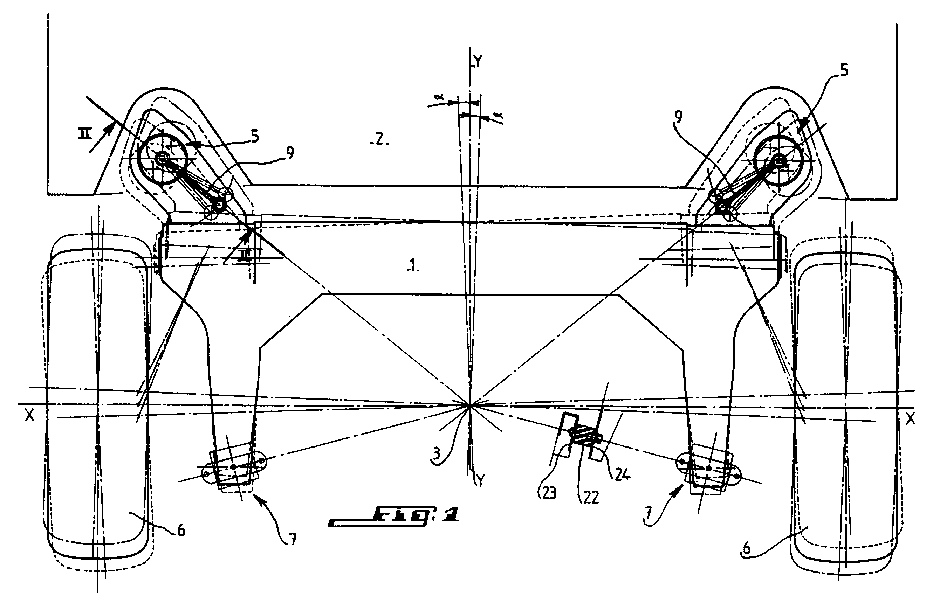

La figure 1 montre un système de liaison élastique d'un ensemble traverse essieu arrière 1 d'un véhicule automobile, à la caisse indiquée en 2 de celui-ci. Ce système permet un pivotement de la traverse 1 par rapport à la caisse 2 autour d'un axe ou centre fictif 3, dans un plan horizontal. Ce système s'applique tout particulièrement à une traverse d'essieu arrière du type à bras tiré dont le système de suspension est intégré à l'ensemble de la traverse pivotante.

Pour assurer le maintien des charges verticales de la caisse 2 sur la traverse arrière 1, le système de liaison comprend deux dispositifs de liaison élastique 5 disposés à l'avant de l'axe X-X des roues arrière 6 et deux dispositifs de liaison élastique 7 situés à l'arrière ou au même niveau que l'axe des roues 6. Les deux dispositifs de liaison avant 5 et les deux dispositifs de liaison arrière 7 sont respectivement disposés symétriquement par rapport à l'axe longitudinal médian Y-Y du véhicule. Les quatre dispositifs de liaison 5 et 7 sont disposés de façon que l'axe fictif de pivotement 3 soit situé à l'intersection du plan médian du véhicule Y-Y et du plan vertical passant par l'axe X-X des roues arrière ou dans le plan médian en arrière de l'intersection.

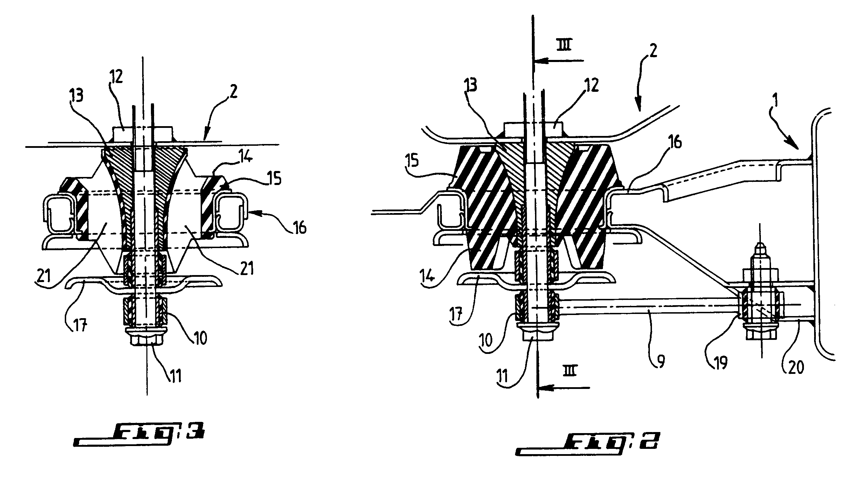

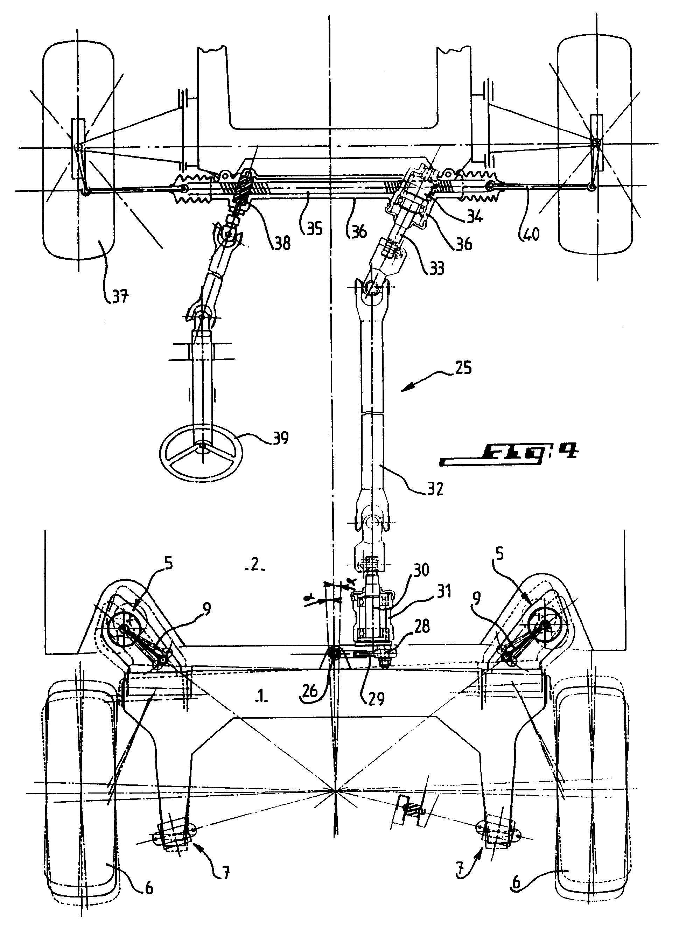

En se reportant aux figures 2 et 3, on constate qu'un dispositif de liaison élastique avant 5 comprend une biellette 9 fixée par l'une de ses extrémités par des moyens élastiques à flexibilité très réduite ou par une rotule à l'extrémité d'une vis verticale 11 qui fait partie d'une fixation élastique classique de la traverse 1 à la caisse 2. La vis 11 est reliée rigidement à la caisse 2 par l'intermédiaire d'un écrou 12 solidaire de la caisse et est entourée coaxialement d'une entretoise 13 qui comporte sur sa surface radialement externe un bloc en un matériau élastique 14 reposant par une partie formant tête annulaire 15 sur un orifice formant siège pratiqué dans un support 16 de la traverse 1. Le bloc 14 est axialement interposé entre la caisse 2 et une rondelle 17 montée sur la vis 11.

Comme il ressort des figures, les moyens de fixation 10 de la biellette 9 à la vis 11 sont montés concentriques à cette dernière et prennent appui axialement sur une extrémité de l'entretoise interne 13 en appui par son autre extrémité sur la caisse 2. La biellette 9, de longueur prédéfinie, est orientée dans un plan horizontal dans la direction radiale de la vis 11 par rapport au point de pivotement fictif 3. L'extrémité de la biellette 9, qui est opposée à celle fixée à la vis 11, est reliée par une articulation élastique 19 à très faible flexibilité ou par une rotule à un support 20 solidaire de la traverse d'essieu arrière 1. La fixation de la bielle 9 à la caisse 2 par l'intermédiaire de la vis 11 est plus éloignée du point fictif de pivotement 3 que la fixation en 19 à la traverse d'essieu 1. On constate encore à la figure 3 que le bloc élastique 14 présente deux cavités 21 diamétralement opposées dans la direction tangentielle.

En se reportant à la figure 1, on constate en outre que les dispositifs de liaison élastique arrière 7 comportent chacun un bloc allongé en élastomère 22 orienté vers l'axe fictif de pivotement 3 et fixé par ses surfaces supérieure et inférieure en 23 et 24 respectivement à la caisse 2 et la traverse 1.

Grâce à la disposition orientée sur le point ou centre de pivotement fictif 3, des biellettes 9 et du fait que la liaison articulée sur la caisse 2 est plus éloignée de son centre de pivotement 3 que celle sur la traverse, l'ensemble, en dynamique, à tendance en ligne droite à s'autocentrer dans l'axe du véhicule Y-Y, ce qui est très favorable pour la stabilité du véhicule se déplaçant à grande vitesse. Si l'on considère le système dans sa version passive représentée aux figures 1 à 3 et si l'on réduit les déplacements angulaires autour du centre 3 par des butées (non représentées) sur les liaisons élastiques avant 5, il en résulte aussi dans le cas d'accélérations latérales que subit le véhicule en virage, un microbraquage sous-vireur très appréciable en sortie du virage, du point de vue de sécurité. On obtient ainsi un train arrière d'essieu autobraqueur qui tente à braquer dans le même sens que les roues avant, quand l'effort latéral dû à l'accélération latérale en virage devient important.

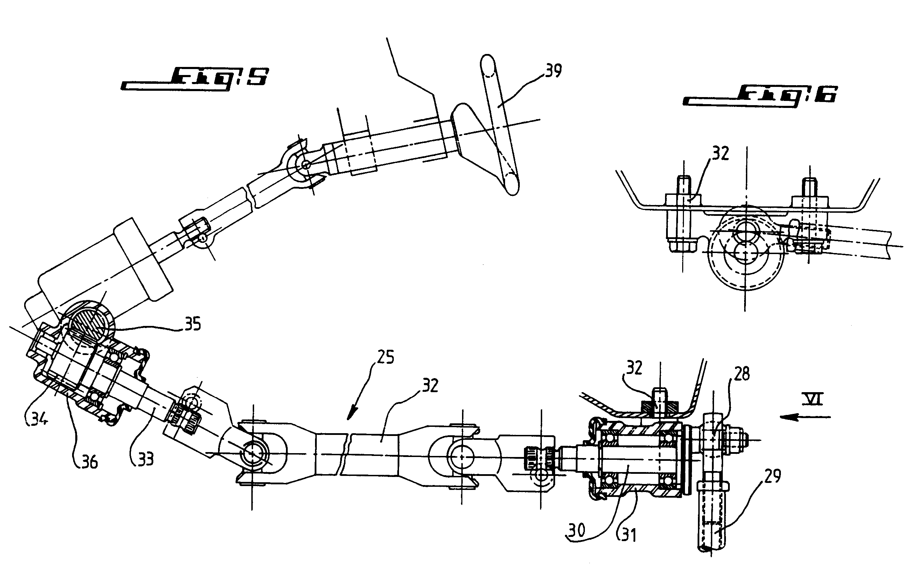

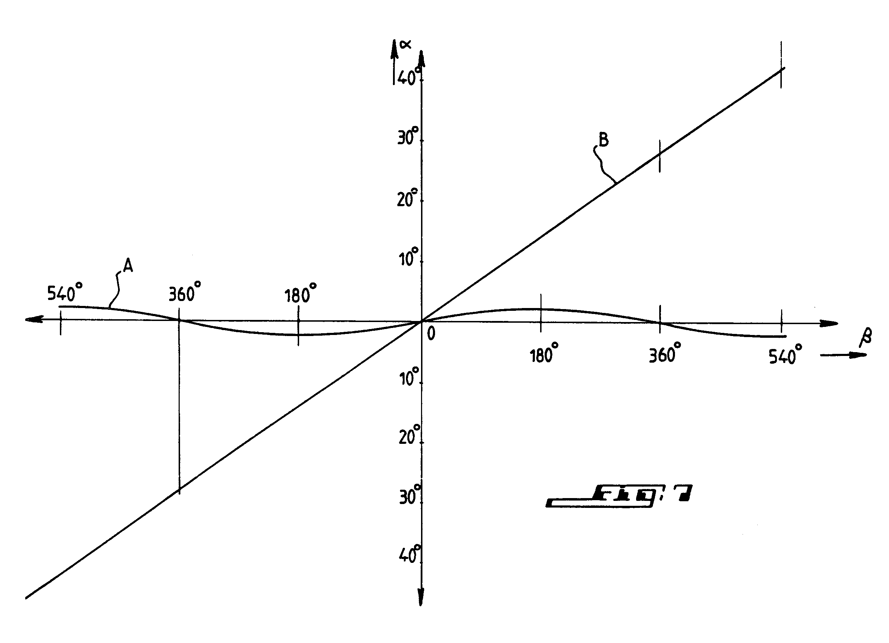

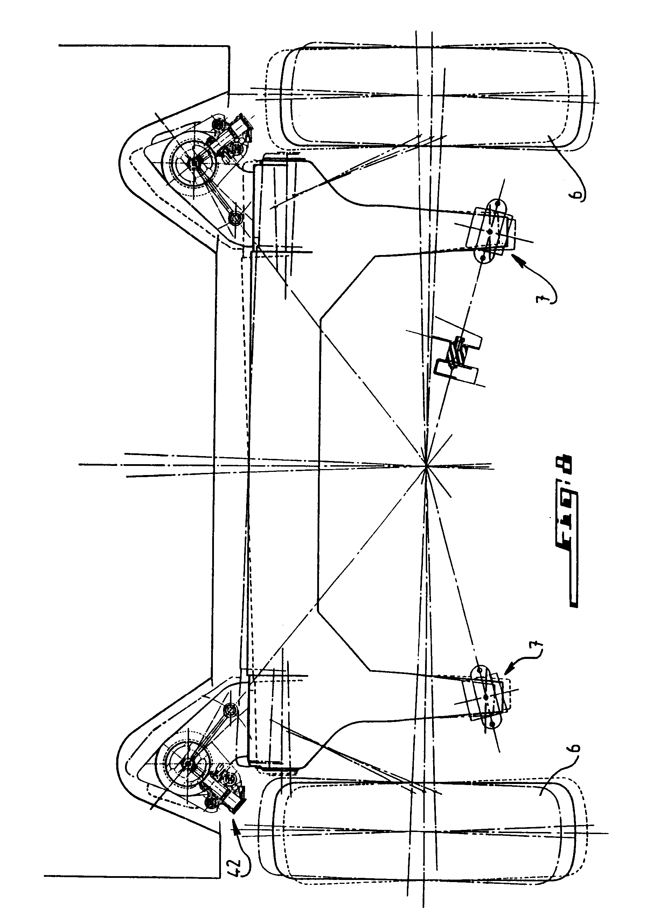

En se reportant aux figures 4 à 6, on décrit ci-après un premier mode de réalisation d'un système de commande de direction arrière pour véhicule automobile à quatre roues directrices, équipé d'un système de liaison élastique tel que représenté aux figures 1 à 3.

Selon la figure 4, le système de commande 25 agit sur la traverse 1 en un point d'articulation 26 situé à l'avant de la traverse et suffisamment distant du centre de pivotement 3 afin de diminuer les efforts de maintien en position et de guidage en phase de pivotement de la traverse 1 autour du centre 3. Le système de commande 25 est du type bielle manivelle et permet d'obtenir une loi de braquage en faisant contribuer les roues arrière 6 à la direction du véhicule.

Le système 25 comprend à cette fin une manivelle 28 qui agit par une bielle 29 sur le point de liaison 26 et est commandée en rotation dans un sens ou dans l'autre à partir d'une position zéro en ligne droite, par un axe de commande 30 formant le centre de rotation de la manivelle. L'axe 30 est guidé en rotation par un boîtier 31 qui est relié rigidement par une vis 32 à la caisse 2. Dans la position zéro, la manivelle 28 et l'arbre de commande 30 se trouvent dans un même plan vertical et les trains avant et arrière sont parallèles. Un arbre de transmission 32 est solidaire en rotation à une de ses extrémités de l'axe de commande 30 et à son autre extrémité d'un axe 33 qui porte un pignon 34 engrénant, à l'avant du véhicule, avec la crémaillère 35 du boîtier de direction 36 qui commande le braquage des roues avant indiquées en 37, en fonction de la rotation d'un pignon 38 commandé par le volant de direction 39. Toute rotation de ce dernier occasionne un déplacement axial de la crémaillère 35 qui entraîne par engrénement la rotation du pignon 34 de commande des roues arrière ainsi que, par les biellettes de direction avant 40, le braquage des roues avant.

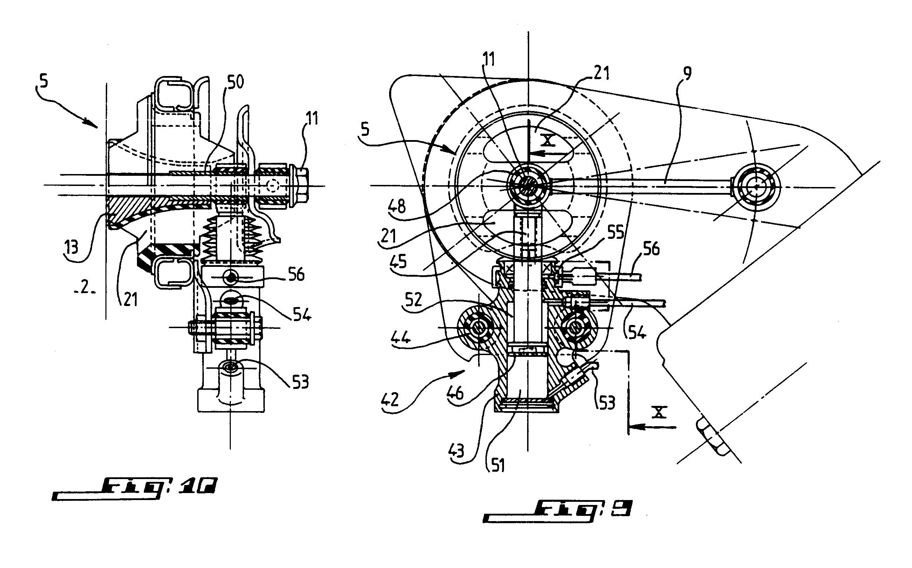

Le rapport d'engrénement du pignon 34 avec la crémaillère 35 pourrait être tel que pour un braquage complet dans un sens des roues avant 37, on obtient 0,75 tour de rotation de la manivelle 28 autour de l'axe de commande 30. La figure 7 montre, à titre d'exemple, par la courbe A l'angle de braquage α de la traverse d'essieu arrière 1 et des roues arrière 6 en fonction de l'angle de rotation β du volant 39 tandis que la droite B indique l'angle moyen de braquage des roues avant. La direction positive de l'ordonnée indique l'angle de braquage α de la roue à droite tandis que la direction négative indique les angles de braquage de la roue à gauche. La figure 7 donne ainsi la loi de braquage du système mécanique de commande selon la figure 4. Ce système de commande des quatre roues directrices est simple, étanche et ne nécessite aucune intervention particulière. Sa fiabilité est comparable à une direction mécanique avant.

Il est à noter que pour obtenir une évolution de la courbe de braquage des roues arrière en fonction de la courbe de braquage des roues avant, il est possible de réaliser un engrénement à l'avant entre la crémaillère 35 et le pignon 34 avec un pas de denture variable, ce qui permet de faire varier en fonction de la position angulaire des roues avant la valeur angulaire de rotation de l'arbre de transmission 32 du système de commande de braquage des roues arrière.

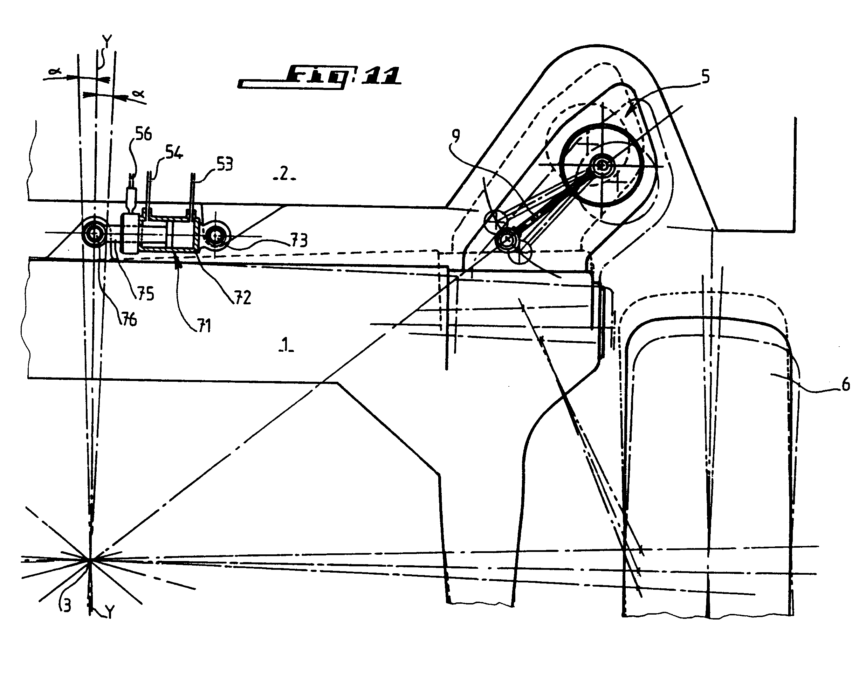

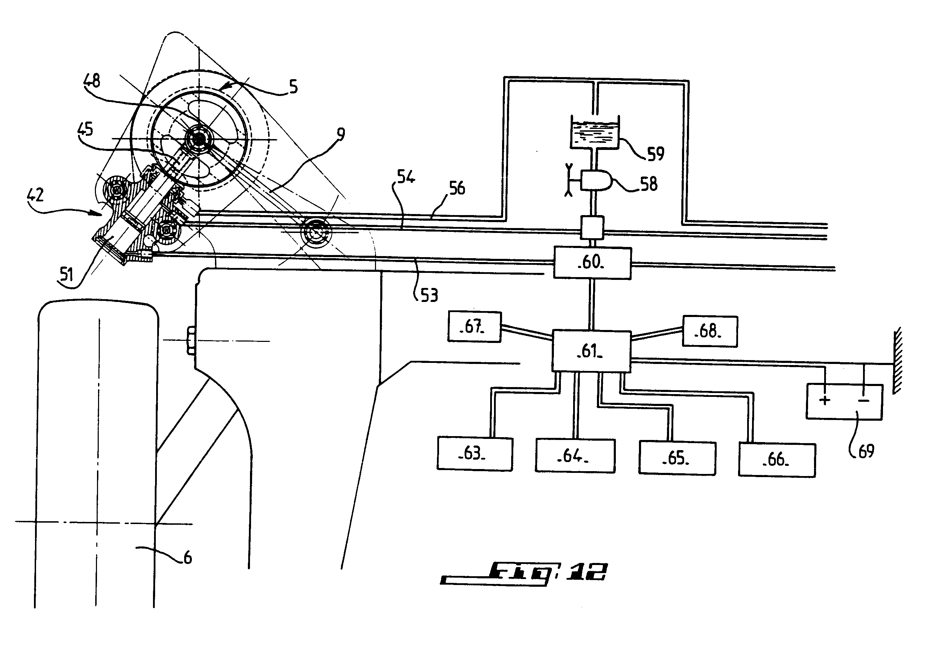

En se reportant aux figures 8 à 12, on décrira ci-après un deuxième mode de réalisation d'un dispositif de commande de direction arrière d'un système de liaison élastique selon la figure 1. Ce dispositif est du type à commande hydraulique.

Dans ce mode de réalisation, chaque dispositif de liaison élastique avant 5 est équipé d'un vérin hydraulique 42 dont le corps de cylindre 43 est relié par deux liaisons élastiques de faible flexibilité 44 à la traverse 1. L'extrémité de la tige 45 du piston 46 du vérin est fixée de façon élastique par un oeil 48, par l'intermédiaire d'une entretoise 50 concentrique et verticale, à l'entretoise 13 de la fixation du dispositif de liaison élastique 5, qui est fixée rigidement à la caisse 2 par la vis 11, comme il ressort de la figure 2.

L'axe du vérin 42 est disposé perpendiculairement au rayon du mouvement du pivotement autour du centre 3 et contenu dans un plan horizontal. Le piston 46 divise l'espace interne du vérin 42 en deux chambres de pression 51, 52, dont les surfaces de pression sont différentes pour assurer un effet différentiel. Le rapport pourrait être de l'ordre de 1 sur 2. Lorsque les roues avant et arrière du véhicule sont en position de ligne droite, le piston 42 est situé dans la zone médiane de la longueur du vérin. Lorsque l'on désire déplacer le piston, on régule la pression dans la chambre 51 à surface de pression plus grande, tandis que la pression dans la chambre 52 est maintenue constante. Pour la mise sous pression des deux chambres 51, 52, chacune comporte à l'extrémité correspondante du vérin une conduite d'alimentation respectivement 53 et 54. Pour le retour de fuites éventuelles, côté axe du piston, un capuchon 55 est connecté à un raccord pour une conduite indiquée en 56.

Comme le montre la figure 12, le système d'alimentation en fluide sous pression comprend essentiellement une centrale de pression 58 reliée à un réservoir de liquide 59 et à un régulateur hydraulique 60. La conduite 53 d'alimentation en liquide régulé de la chambre 51 de chaque vérin 42 est reliée à ce régulateur hydraulique, tandis que la conduite 54 de la chambre 52 de chaque vérin est reliée à la centrale de pression 58. Les conduites de retour de fuite 56 sont amenées au réservoir 59. Le régulateur hydraulique 60 est commandé par un calculateur électronique 61 qui reçoit des capteurs appropriés des signaux électriques correspondant à des valeurs de paramètres représentatifs de l'état dynamique du véhicule. Le système comporte avantageusement des capteurs 63 à 68 pour mesurer respectivement les angles du volant, la vitesse du véhicule, les accélérations latérales, les vitesses de lacet, et les positions relatives caisse/traverse d'essieu arrière côté gauche et côté droit, c'est-à-dire les valeurs de braquage de la traverse arrière. Le calculateur électronique 61 reçoit l'énergie électrique de la batterie électrique 69.

La figure 11 montre une variante du système de commande de direction arrière, représenté aux figures 8 à 10. Dans cette variante, au lieu d'associer un vérin hydraulique 42 à chaque dispositif de liaison 5, on utilise qu'un seul vérin 71 à effet différentiel, dont le corps de cylindre 72 est relié en 73 par une articulation élastique à la caisse 2 et dont la tige 75 est reliée en 76 par une articulation appropriée à l'avant de la traverse 1, en son milieu. Ce vérin s'étend sensiblement perpendiculairement à l'axe longitudinal Y-Y du véhicule. La fixation à la caisse est située à une distance appropriée de cet axe longitudinal. La structure du vérin 71 est la même que celle des vérins 42. Le vérin 71 est par conséquent relié aux conduites 53, 54 et 56 du système de la figure 12.

Bien entendu de diverses modifications peuvent être apportées aux dispositifs de liaison élastique 5 et 7 selon les revendications tels que représentés aux figures 1 à 3. Notamment en ce qui concerne les dispositifs de liaison avant 5, il importe essentiellement que la flexibilité de ces liaisons soit relativement grande dans la direction tangentielle au centre de pivotement et que la flexibilité dans la direction radiale soit très réduite. Quant au système de direction arrière, il doit assurer un pivotement guidé autour du centre de pivotement, suivant une loi prédéterminée, à partir du braquage des roues avant.

## Revendications

1. Essieu arrière de véhicule automobile comportant une traverse (1) montée pivotante par rapport à la caisse (2), autour de l'axe fictif (3) situé à l'intersection du plan longitudinal médian du véhicule et du plan vertical passant par l'axe des roues arrière (6) ou en arrière de cette intersection, la traverse (1) étant reliée à la caisse (2) par un système de liaison élastique comprenant deux premiers dispositifs de liaison élastique (5) situés à l'avant de l'axe des roues arrière et deux seconds dispositifs de liaison élastique (7) situés en arrière ou au niveau de l'axe des roues arrière, les deux premiers dispositifs de liaison élastique (5) et les deux seconds dispositifs de liaison élastique (7) étant disposés respectivement symétriquement par rapport au plan médian longitudinal du véhicule, chaque premier dispositif de liaison élastique (5) comportant des moyens de flexion (14, 9) qui sont interposés entre la caisse (2) et la traverse (1) pour conférer à la liaison une flexibilité relativement grande dans la direction tangentielle par rapport à l'axe fictif (3) et une faible flexibilité dans la direction radiale, caractérisé en ce que les moyens de flexion (14, 9) comportent une biellette (9) qui s'étend sensiblement radialement par rapport à l'axe fictif (3) et est articulée par l'une de ses extrémités à la traverse (1) et par son autre extrémité à la caisse (2), concentriquement audit centre du dispositif de liaison (5).

2. Essieu selon la revendication 1, caractérisé en ce que chaque première liaison élastique (5) comprend une vis (11) solidaire de la caisse (2), une entretoise de révolution (13) coaxiale à la vis, un support élastique (14) avantageusement en élastomère, coaxial à la vis (11), prenant appui intérieurement sur l'entretoise (13) et extérieurement sur la traverse (1) et comportant deux évidements (21) symétriques situés perpendiculairement à la biellette (9), cette dernière étant reliée par l'extrémité précitée à la vis (11).

3. Essieu selon la revendication 3, caractérisé en ce que la biellette est articulée sur la vis (11) et sur la traverse (1), avantageusement sur une vis solidaire de la traverse, par des fixations élastiques à flexibilité réduite.

4. Essieu selon l'une des revendications précédentes, caractérisé en ce que chaque second dispositif de liaison élastique (7) comprend un bloc élastique allongé (22), avantageusement en un matériau élastomère, dont l'axe est orienté vers l'axe fictif (3) de pivotement de l'essieu (1).

5. Essieu selon l'une des revendications précédentes, caractérisé en ce qu'au moins un des premiers dispositifs de liaison élastique (5) est muni d'un vérin hydraulique différentiel à double effet (42) dont la tige (45) orientée perpendiculairement à la biellette (9) est articulée à la vis (11) solidaire de la caisse (2) par une fixation à flexibilité réduite et dont le cylindre (43) est fixé à la traverse (1), le vérin étant commandé en fonction d'au moins un paramètre de conduite du véhicule.

6. Essieu selon l'une des revendications 3 à 5, caractérisé en ce qu'il comporte un vérin hydraulique différentiel à double effet (71) qui est interposé, par l'intermédiaire d'une fixation à flexibilité réduite entre la traverse (1) et la caisse (2), de façon à produire un mouvement angulaire de la traverse autour de l'axe fictif de pivotement (3), ce vérin étant alimenté en liquide sous pression en fonction d'au moins un paramètre de fonctionnement du véhicule.

7. Essieu selon la revendication 7, caractérisé en ce que le vérin hydraulique (71) est disposé perpendiculaire au plan médian (Y-Y) du véhicule et que ce vérin est articulé par son corps de cylindre (72) ou sa tige (75) à une patte solidaire de la caisse (2) (en 73) et par sa tige (75) ou son corps (72) à une patte solidaire de la traverse (1) en un point (76) situé dans le plan médian (Y-Y) du véhicule.

8. Véhicule automobile, caractérisé en ce qu'il est muni d'un essieu arrière selon l'une des revendications 6 à 8 et en ce qu'il comprend un circuit hydraulique propre à alimenter le vérin différentiel (42, 71) selon des paramètres de conduite du véhicule, en particulier de l'angle au volant, détectés par des capteurs (63 à 68).

9. Véhicule automobile à quatre roues directrices comportant une direction avant à crémaillère ainsi qu'un pignon engrenant sur cette crémaillère pour faire tourner un arbre selon le pivotement des roues avant, caractérisé en ce qu'il est muni d'un essieu arrière selon l'une des revendications 1 à 5 et que la direction comporte une manivelle (28) entraînée en rotation par l'arbre (31, 32, 33), cette manivelle étant articulée à une bielle (29) dont l'autre extrémité est articulée à la traverse (1) en un point (26) situé dans le plan médian (Y-Y) du véhicule, à une certaine distance de l'axe fictif de pivotement (3).

## Patentansprüche

1. Kraftfahrzeughinterachse mit einem gegenüber dem Wagenkasten (2) um eine Scheinachse (3) herum schwenkbar angeordneten Querträger (1), welche Scheinachse am Durchschnitt der Längsmittelebene des Fahrzeugs und der durch die Achse der Hinterräder (6) führenden senkrechten Ebene oder hinter diesem Durchschnitt gelegen ist, wobei der Querträger (1) mit dem Wagenkasten (2) durch ein elastisches Verbindungssystem verbunden ist, welches zwei erste vorwärts gegenüber der Achse der Hinterräder gelegene elastische Verbindungsvorrichtung (5) und zwei zweite rückwärts gegenüber oder im Bereich der Achse der Hinterräder gelegene elastische Verbindungsvorrichtung (7) aufweist, wobei die beiden ersten elastischen Verbindungsvorrichtungen (5) und die beiden zweiten elastischen Verbindungsvorrichtungen (7) jeweils symmetrisch in Bezug auf die Längsmittelebene des Fahrzeugs angeordnet sind, wobei jede erste elastische Verbindungsvorrichtung (5) Biegungsmittel (14, 9), die zwischen dem Wagenkasten (12) und dem Querträger (1) gefügt sind, aufweist, um der Verbindung eine verhältnismässig grosse Biegsamkeit in der tangentialen Richtung in Bezug auf die Scheinachse (3) und eine schwache Biegsamkeit in der radialen Richtung zu verleihen, dadurch gekennzeichnet, dass die Biegungsmittel (14, 9) einen Lenker (9) aufweisen, der sich etwa radial in Bezug auf die Scheinachse (3) erstreckt und mit einem seiner Enden an dem Querträger (1) und mit seinem anderen Ende an dem Kasten (2) konzentrisch mit dem besagten Mittelpunkt der Verbindungsvorrichtung (5) angelenkt ist.

2. Achse nach Anspruch 1, dadurch gekennzeichnet, dass jede erste elastische Verbindung (5) eine mit dem Kasten (2) festverbundene Schraube (11), ein mit der Schraube koaxiales Rotationszwischenstück (13), eine mit der Schraube (11) koaxialen elastischen Halter (14) vorteilhaft aus einem Elastomer aufweist, welcher sich innen an dem Zwischenstück (13) und aussen an dem Querträger (1) abstützt und zwei senkrecht zum Lenker (9) gelegene symmetrische Ausparungen (21) aufweist, wobei der Lenker durch das vorgenannte Ende mit der Schraube (11) verbunden ist.

3. Achse nach Anspruch 2, dadurch gekennzeichnet, dass der Lenker an der Schraube (11) und an dem Querträger (1) vorteilhaft an einer mit dem Querträger verbundenen Schraube durch elastische Befestigungen mit verminderter Biegsamkeit angelenkt ist.

4. Achse nach einem der vorangehenden Ansprüche, dadurch gekennzeichnet, dass jede zweite elastische Verbindungsvorrichtung (7) einen länglichen elastischen Block (2) vorteilhaft aus einem Elastomerwerkstoff aufweist, dessen Achse zur Schwenkscheinachse (3) der Radachse (1) hin ausgerichtet ist.

5. Achse nach einem der vorangehenden Ansprüche, dadurch gekennzeichnet, dass wenigstens eine der ersten elastischen Verbindungsvorrichtungen (5) mit einem doppelwirkenden hydraulischen Differentialkraftzylinder (42) versehen ist, dessen senkrecht zum Lenker (9) ausgerichtete Stange (45) an der mit dem Wagenkasten (2) fest verbundenen Schraube (11) durch eine Befestigung mit verminderter Biegsamkeit angelenkt ist und dessen Zylinder (43) an dem Querträger (1) befestigt ist, wobei der Kraftzylinder in Abhängigkeit wenigstens eines Lenkungsparameters des Fahrzeugs gesteuert wird.

6. Achse nach einem der Ansprüche 3 bis 5, dadurch gekennzeichnet, dass sie einen doppelwirkenden hydraulischen Differentialkraftzylinder (71) aufweist, der über eine Befestigung mit verminderter Biegsamkeit zwischen dem Querträger (1) und dem Wagenkasten (2) gefügt ist, um eine Winkelbewegung des Querträgers um die Schwenkscheinachse (3) herum zu erzeugen, wobei dieser Kraftzylinder mit Druckflüssigkeit in Abhängung wenigstens eines Betriebsparameters des Fahrzeug gespeist wird.

7. Achse nach Anspruch 6, dadurch gekennzeichnet, dass der hydraulische Kraftzylinder (71) senkrecht zur Mittelebene (Y-Y) des Fahrzeugs angeordnet ist und dass dieser Kraftzylinder mit seinem Zylinderkörper (72) oder seiner Stange (75) an einem mit dem Wagenkasten (2) (bei 73) fest verbundenen Lappen und mit seiner Stange (75) oder seinem Körper (72) mit einem mit dem Querträger (1) an einem in der Mittelebene (Y-Y) des Fahrzeugs gelegenen Punkt (76) fest verbundenen Lappen angelenkt ist.

8. Kraftfahrzeug, dadurch gekennzeichnet, dass es mit einer Hinterachse gemäss einem der Ansprüche 5 bis 7 versehen ist und dass es einen hydraulischen Kreislauf aufweist, der geeignet ist, den Differentialkraftzylinder (42, 71) gemäss durch Messwertgeber (63 bis 68) ermittelten Lenkungsparametern des Fahrzeugs, insbesondere des Lenkradwinkels zu speisen.

9. Kraftfahrzeug mit vier Leiträdern, das eine vordere Zahnstangenlenkung sowie ein mit dieser Zahnstange kämmendes Zahnrad, um eine Welle gemäss der Verschwenkung der Vorderräder zu drehen, aufweist, dadurch gekennzeichnet, dass es mit einer Hinterachse nach einem der Ansprüche 1 bis 4 versehen ist, und dass die Lenkung eine durch die Welle (31, 32, 33) antriebsmässig gedrehte Kurbel (28) aufweist, wobei diese Kurbel an dem Lenker (29) an einer in der Mittelebene (Y-Y) des Fahrzeugs in einer gewissen Entfernung von der Schwenkscheinachse (3) gelegenen Stelle (26) angelenkt ist.

## Claims

1. Rear axle of automotive vehicle comprising a cross member (1) pivotally mounted with respect to the body (2) about the fictitious axis (3) located at the intersection of the longitudinal middle plane of the vehicle and of the vertical plane passing through the axis of the rear wheels (6) or rearwards of this intersection, the cross member (1) being connected to the body (2) by an elastic connecting sytem comprising two first elelastic connecting devices (5) located forward of the axis of rear wheels and two second elastic connecting devices (7) located backwards or at the level of the axis of the rear wheels, both first elastic connecting devices (5) and both second elastic connecting devices (7) being respectively disposed symmetrically with respect to the longitudinal middle plane of the vehicle, each first elastic connecting device (5) comprising bending means ( 14, 9) which are interposed between the body (2) and the cross member (1) to impart to the connection a relatively great flexibility in the tangential direction with respect to the fictitious axis (3) and a small flexibility in the radial direction, characterized in that the bending means (14, 9) comprise a link (9) which extends substantially radially with respect to the fictitious axis (3) and is pivotally connected with one of its ends to the cross member (1) and with its other end to the body (2) concentrically to the said center of the connecting device (5).

2. Axle according to claim 1, characterized in that each first elastic connection (5) comprises a screw (11) made fast to the body (2), a brace of revolution (13) coaxial with the screw, an advantageously elastomeric elastic support (14) coaxial with the screw (11) bearing internally upon the brace (13) and externally upon the cross member (1) and comprising two symmetrical recesses (21) located in perpendicular relation to the link (9), the latter being connected with the aforesaid end to the screw (11).

3. Axle according to claim 2, characterized in that the link is pivotally connected to the screw (11) and to the cross member (1), advantageously to a screw made fast to the cross member by elastic fastenings with a reduced flexibility.

4. Axle according to one of the foregoing claims, characterized in that each second elastic connecting device (7) comprises an elongated elastic block (22) advantageously made from an elastomere material, the axis of which is orientated towards the fictitious pivot axis (3) of the axle (1).

5. Axle according to one of the foregoing claims, characterized in that at least one of the first elastic connecting devices (5) is provided with a double acting differential hydraulic jack (42) the rod (45) of which oriented perpendicularly to the link (9) is pivotally connected to the screw (11) made fast to the body (2) by a fastening with a reduced flexibility and the cylinder (43) of which is fastened to the cross member (1), the jack being operated in accordance with at least one driving parameter of the vehicle.

6. Axle according to one of claims 3 to 5, characterized in that it comprises a double acting differential hydraulic jack (71) which is interposed through the medium of a fastening with a reduced flexibility between the cross member (1) and the body (2) so as to produce an angular motion of the cross member about the fictitious pivot axis (3), this jack being fed with a liquid under pressure in accordance with at least one operating parameter of the vehicle.

7. Axle according to claim 6, characterized in that the hydraulic jack (71) is disposed in perpendicular relation to the middle plane (Y-Y) of the vehicle and that this jack is pivotally connected with its cylinder body (72) or its rod (75) to a lug made fast (at 73) to the car body (2) and with its rod (75) or its body (72) to a lug made fast to the cross member (1) at a point (76) located in the middle plane (Y-Y) of the vehicle.

8. Automotive vehicle, characterized in that it is provided with a rear axle according to one of claims 5 to 7 and in that it comprises a hydraulic circuit adapted to feed the differential jack (42, 71) according to parameters for the driving of the vehicle, in particular to the angle of the steering wheel, detected by sensors (63 to 68).

9. Automotive vehicle with four steerable wheels comprising a front rack steering as well as a pinion meshing with this rack to cause a shaft to rotate according to the pivoting of the front wheels, characterized in that it is provided with a rear axle according to one of claims 1 to 4 and that the steering comprises a crank (28) rotated by the shaft (31, 32, 33), this crank being pivotally connected to a link (29) the other end of which is pivotally connected to the cross member (1) at a point (26) located in the middle plane (Y-Y) of the vehicle at a certain distance from the fictitious pivot axis (3).
